# EUROPEAN PATENT APPLICATION

(11) **EP 1 298 873 A2**
(43) Date of publication of application: **02.04.2003**
(21) Application number: 02256811.7
(22) Date of filing: 30.09.2002
(51) Int. Cl.: H04L 12/58

(54) **Method and apparatus for transferring messages between realms on a network**

(30) Priority: 28.09.2001 US 968426
(71) Applicant: Openwave Systems Inc., Redwood City, CA 94063 (US)
(72) Inventor: Clark, Jonathan H., Holmdel, New Jersey 07733 (US); Silberman, Samuel G., Arlington, Massachusetts 02474 (US)
(74) Representative: Cross, Rupert Edward Blount

(57) **Abstract**

A message transfer agent (MTA) in a network domain on a network receives an email, the envelope of which contains the address of the intended recipient. The MTA accesses account data of the intended recipient to identify a realm of the intended recipient, from a plurality of realms defined within the network domain. Each realm may include one or more MTAs. The MTA determines whether it is responsible for the realm of the intended recipient and, if so, stores the communication in an associated message store server. If the MTA is not in the realm of the intended recipient, then it identifies an MTA responsible for the realm of the intended recipient within the same network domain and relays the email within the network domain to the other MTA, without altering the recipient address of the email.

## Description

### FIELD OF THE INVENTION

The present invention pertains to data and communications networks. More particularly, the present invention relates to techniques for communicating messages, such as electronic mail messages, on a network.

### BACKGROUND OF THE INVENTION

While in transit, a piece of electronic mail ('email") normally is thought of as having two parts, the "message" and the "envelope". The "message" normally is also thought of as having two parts, the "body" (the contents of the email message), and the "headers", which contain a variety of tracking information and other information about the message, such as the date it was prepared, the original sender's name, and the original recipient list. The "envelope" contains the recipient's address (not his name), the sender's address (which is trivially forgeable, and thus, may or may not be accurate), and it may contain some data relating to how the message should be passed from one server to the next (e.g., whether encryption should be used).

Note that the only recipient address which matters for email routing purposes is the recipient address carried in the email envelope, not the recipient address(es) carried in the headers. (Normally, the recipient address in the envelope is originally set from the header lines when the piece of email is created, but this is not necessarily the case.) The usual case is that a server, after accepting a piece of email, will (if the addressee is local, i.e., this server will take responsibility for final delivery to the user) either deliver it locally, or will forward the email somewhere else by rewriting the recipient address in the envelope. If the addressee is non-local (this server will not take responsibility for final delivery), it will parse the recipient's address to determine the next destination to where the email should be sent. When forwarding is required, the forwarding server normally does not change the address(es) in the headers (i.e., the "To" and "Cc" lines); however, the next server to receive the email normally adds the new address (which it reads that address from the envelope) to the "Received" header.

Thus, the recipient's address is generally visible to the end user, because it is normally copied from the envelope into the Received header. The Received header is generally added to every message processed by a message transfer agent (MTA), a device which routes the message, and is part of the tracking information mentioned above. Consequently, if someone has his email forwarded from, for example, userA@example1.com to userB@example2.com, then a piece of email originally sent to userA@example1.com will (by the time it is delivered) carry a Received line added by example1.com's MTA bearing the address "userA@example1.com" and a Received line added by example2.com's MTA bearing the address "userB@example2.com".

An example may be useful. The following illustrative email headers show the Received lines which would be added to a piece of email originally addressed to "user@example.com" and which is internally rerouted in a current email system.
Received: from ganymede.example.com
by io.example.com with ESMTP id MAA27612
for <user@io.example.com>; Mon, 18 Jun 2001 13:55:03 -0500 (EDT)
Received: from external.example2.com
by ganymede.example.com with ESMTP id MAA17860
for <user@example.com>; Mon, 18 Jun 2001 13:55:01 -0500 (EDT)

In the Received lines of a standard email, the top address is the address added most recently while the bottom address is the address added least recently. So, in the above example the piece of email was received from a host "external.example2.com" by ganymede.example.com, at which point it was addressed to "user@example.com". Then, ganymede.example.com resent the email to io.example.com by rewriting the recipient's address in the envelope to its internal form of 'user@io.example.com'. The host io.example.com then wrote this address into the Received header.

The internal address ("user@io.example.com" in the above example) is easily visible, from the Received header, to anyone having access to the message. This visibility is undesirable from a security standpoint. For example, the visibility of users' email addresses may result in inadvertently exposing users' addresses to unauthorized parties. This information could then be used for various untoward purposes, such as sending unsolicited emails (sometimes called "spam"). A telecommunications service provider might experience significant customer dissatisfaction if this occurs frequently. Consider another scenario, one involving a large service provider with customers and installations on multiple continents, e.g., in Europe, Asia, and the United States (U.S.). Assume that the email addresses of the service provider's subscribers all have the general format, "user@example.com". To improve internal efficiency or for legal reasons, the service provider may wish to maintain each subscriber's mail store within the continent on which the user resides, but to accept email for all its subscribers closest to the point at which the email was sent. Doing so would allow the service provider to use its internal network to deliver this email rather than relying on the comparatively unreliable Internet. Hence, the service provider may wish to present a single network appearance for its multiple physical locations. Also, the service provider may wish to route mail internally between multiple MTAs, which is a common practice.

The service provider's goals might be accomplished by setting up two directories, i.e., a regular directory with mail store information, etc., and another directory containing only user addresses with their forwarding information, as follows:

| User name | User Address |
|---|---|
| john.user | john.user@us.example.com |
| jean.user | jean.user@eu.example.com |
| shen.user | shen.user@as.example.com |

However, these "internal" email addresses would then be visible to the customers and unauthorized users, who may then give them out to other parties. Further, when customer john.user takes up an assignment in Singapore and his account is moved to the service provider's Asian installation, email addressed to "john.user@us.example.com" will fail. Also, the overhead of setting up a secondary directory can be significant. Thus, a solution to the above-mentioned problems is needed.

### SUMMARY OF THE INVENTION

A message transfer agent in a network domain on a network receives an electronic communication, which has a recipient address indicating an intended recipient of the message. The message transfer agent determines whether the message transfer agent has a predetermined association with the intended recipient and, if not, relays the electronic communication to another message transfer agent within the network domain, without altering the recipient address of the electronic communication.

Other features of the present invention will be apparent from the accompanying drawings and from the detailed description which follows.

### BRIEF DESCRIPTION OF THE DRAWINGS

The present invention is illustrated by way of example and not limitation in the figures of the accompanying drawings, in which like references indicate similar elements and in which:

Figure 1 shows a conventional network for communication of electronic mail (email);

Figure 2 is a block diagram illustrating the operation of a conventional email system;

Figure 3 shows a network for communication of email using realms;

Figure 4 is a block diagram illustrating the operation of a conventional email system using realms;

Figure 5 shows an email system including a message transfer agent (MTA);

Figure 6 is a flow diagram showing a high-level process used in an MTA to process received email; and

Figure 7 shows an abstraction of a processing system in which an MTA can be implemented.

### DETAILED DESCRIPTION

A message transfer agent (MTA) for transferring email messages on a network without rewriting the recipient's address is described. As used herein, an MTA is a device which sends messages to, and receives messages from, other sites on a network or from clients. Note that in this description, references to "one embodiment" or "an embodiment" mean that the feature being referred to is included in at least one embodiment of the present invention. Further, separate references to "one embodiment" in this description do not necessarily refer to the same embodiment; however, neither are such embodiments mutually exclusive, unless so stated and except as will be readily apparent to those skilled in the art. For example, a feature, structure, act, etc. described in one embodiment may also be included in other embodiments. Thus, the present invention can include any variety of combinations and/or integrations of the embodiments described herein.

As described in greater detail below, the present invention adds a third option to the two "local delivery" options mentioned above. Rather than merely delivering an email to a mail store or forwarding it elsewhere by rewriting the recipient address, the receiving MTA can redirect the email to another MTA, which will then deliver it. Importantly, this redirection is done without rewriting the recipient address, and so, in some sense is invisible to the user (the redirection is actually not invisible, but the underlying datum which caused the redirection is). An advantage of this technique is greater security in terms of user's internal email addresses. In addition, the protocols used between MTAs may be more robust. For example, simple mail transfer protocol (SMTP) can be used in place of less robust (and/or proprietary) protocols.

To carry out this technique, as described in greater detail below, an MTA receives an email, an envelope of which contains the address of the intended recipient. The MTA accesses account data of the intended recipient to identify the "realm" of the intended recipient, from a number of possible realms defined within the network domain. A realm may be a defined subdomain of a standard domain name service (DNS) domain. More specifically, a realm may be defined as a group of MTAs. A realm will normally "include" (be served by) two or more MTAs, although that is not necessarily the case. The MTA receiving the email determines whether it is responsible for serving the realm of the intended recipient and, if so, stores the message in the user's message store server (MSS). An MSS is a server in which one or more users' messages are stored until they are retrieved and deleted. If the MTA is not responsible for serving the realm of the intended recipient, the MTA identifies an MTA which does serve the realm of the intended recipient, within the same network domain, and relays the message within the network domain to the other MTA, without altering the recipient address of the email.

The realms feature operates as follows: each email user account is given an extra attribute which defines the user's realm, and each MTA has a list of the realms of which it is a member (serves). This list may be set, for example, by configuration key but alternatively could be created and managed in any of a variety of ways. The MTA will deliver to an MSS any email addressed to a user in a realm which it serves, and send to another MTA any email addresses to any users in other realms.

When a piece of email is received, addressed to a user, the realm of that user is identified from the realm attribute of the user's account. The value of this attribute can be a simple string, and is compared with the list of realms of which this MTA is a member. If there is a match, then the message is delivered to the MSS. Otherwise, the message is sent on to an MTA which is a member of the user's realm. The determination as to which MTA is a member of a particular realm could be made in any of a variety of ways, such as a DNS query, a static table, or a directory lookup. To facilitate description, the embodiments described herein use DNS query to an MTA which serves a given realm. Assuming DNS query is used, the stored realm attribute values are DNS domains. Since the routing is done without modifying the recipient address, the process is invisible to the user.

Note that in this description, the relationship between an MTA and a realm may be expressed in any of several ways, all of which are intended to have the same meaning. For example, an MTA may be described as being "in" a realm, as being "included in" a realm, as being "a member of" a realm, as "serving" a realm, as "responsible for" a realm, etc. All of these expressions are intended to be interchangeable.

One advantage of this technique is that it is no longer necessary for the "internal" networks and hosts (particularly mail store hosts) of an email system to be exposed outside a physical installation, providing a significant security benefit. To rework the example given above, in a case where the realms have been set up correctly, the following headers might result:
Received: from ganymede.example.com
by io.example.com with ESMTP id MAA27612
for <user@example.com>; Mon, 18 Jun 2001 13:56:34 -0500 (EDT)
Received: from external.example2.com
by ganymede.example.com with ESMTP id MAA17860
for <user@example.com>; Mon, 18 Jun 2001 13:56:23 -0500 (EDT)

It can be seen that while the piece of email has followed the same route, no internal (to the service provider) address is exposed.

Recall the example of the large service provider with customers and installations in Europe, Asia, and the U.S. As noted, the service provider wishes to maintain each user's mail store within the continent on which the user resides and accept email for all its users closest to the point at which the email was sent, all while maintaining a single network appearance and without exposing its subscribers email addresses in their emails.

The use of realms allows this to be done by adding a new attribute to the user's directory entry, i.e., the "mailRealm". Modifying the previously-mentioned example, this can accomplished by assigning mail realms done as follows:

| User name | mailRealm |
|---|---|
| john.user | us.example.com |
| jean.user | eu.example.com |
| shen.user | as.example.com |

Using this technique, when email arrives at any MTA, the user's realm is retrieved by the MTA and is compared with the list of realms of which the MTA is a member. It would be natural for an MTA in the U.S. to be a member of the realm, "us.example.com", so a piece of email arriving at such an MTA for jolin.user@example.com would be delivered directly to that MTA's MSS. However, the same MTA receiving a piece of email for "jean.user@example.com" would forward it via SMTP to an MTA physically located in Europe, which is a member of the realm, "eu.example.com".

Another advantage of the realms technique is that realms can be defined to provide tailored message processing. For example, the MTAs of a particular realm may be configured to provide a unique set of extension services. As a more specific example, users with so-called "3G" (third generation) cellular telephones can be assigned to a particular realm that contains MTAs that support 3G features and services, while customers with older (legacy) phones might be assigned to another realm with fewer capabilities.

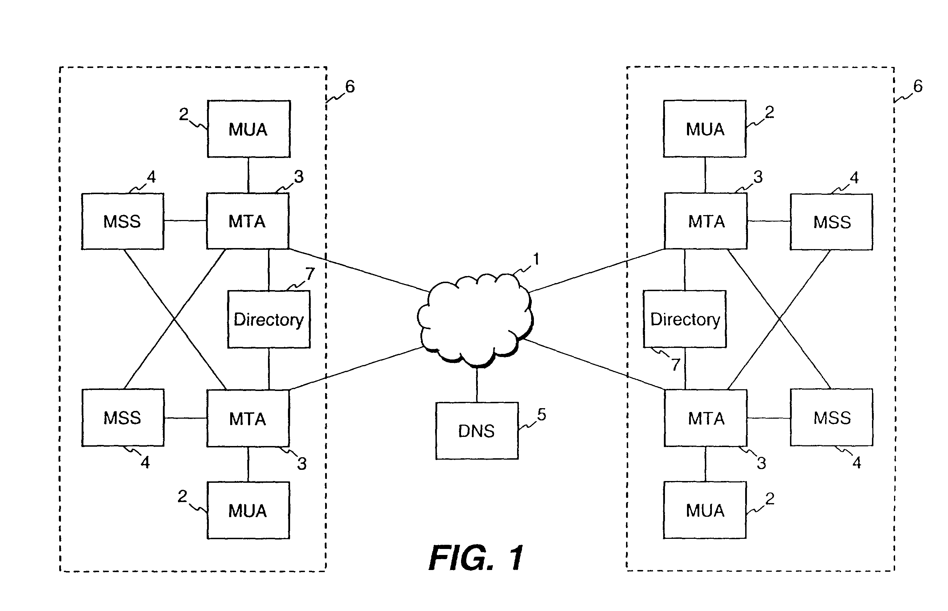

Refer now to Figure 1, which shows a conventional network environment for communication of email. The network 1 may be, or may include, for example, the Internet, one or more a campus intranets, local area networks (LANs), wide area networks (WANs),, or wireless telecommunications networks, e.g., a cellular digital packet data (CDPD) network, a global system for mobile (GSM) communications network, a time division multiple access (TDMA) network, a personal digital cellular (PDC) network, or a personal handy-phone system (PHS) network. Various users on the network 1 use their respective message user agents (MUAs) 2 to send and receive email messages. The MUAs 2 may be conventional email client software applications, such as Microsoft Outlook or Lotus Notes. Transfer of emails over the network 1 is carried out by various MTAs 3 using, for example, SMTP. Each MTA 3 is located within one of multiple predefined domains 6, which may be standard DNS (Internet) domains. Emails are stored by the MTAs 3 in various MSSs 4 connected to the MTAs 3. Each MSS 4 stores emails addressed to one or (more typically) multiple users. The MTAs 3 use DNS services provided by a global DNS 5 on the network 1 using standard DNS protocol. Note that the illustrated global DNS 5 is notional, in that it is made of separate DNS servers run by individual sites, and a routing mechanism. Note also that sites sometimes run their own private DNS, entries in which are not sent out to the Internet but are reserved for use only within the site.

To facilitate explanation, it is assumed that each domain 6 in Figure 1 corresponds to a different service provider. Accordingly, each domain 6 contains its own directory 7, which services the MTAs 3 within that domain. Each directory 7 stores user-specific data, including the MSS 4 in which each user's mailbox is maintained.

Each of the MTAs 3 and MSSs 4 as well as the global DNS 5 may be implemented in any suitable physical platform, such as one or more conventional server-class computers or personal computers (PCs). Each of the MUAs 2 also may be implemented in any suitable physical platform, such as a conventional PC or a handheld mobile device, e.g., cellular telephone, personal digital assistant (PDA), or two-way pager.

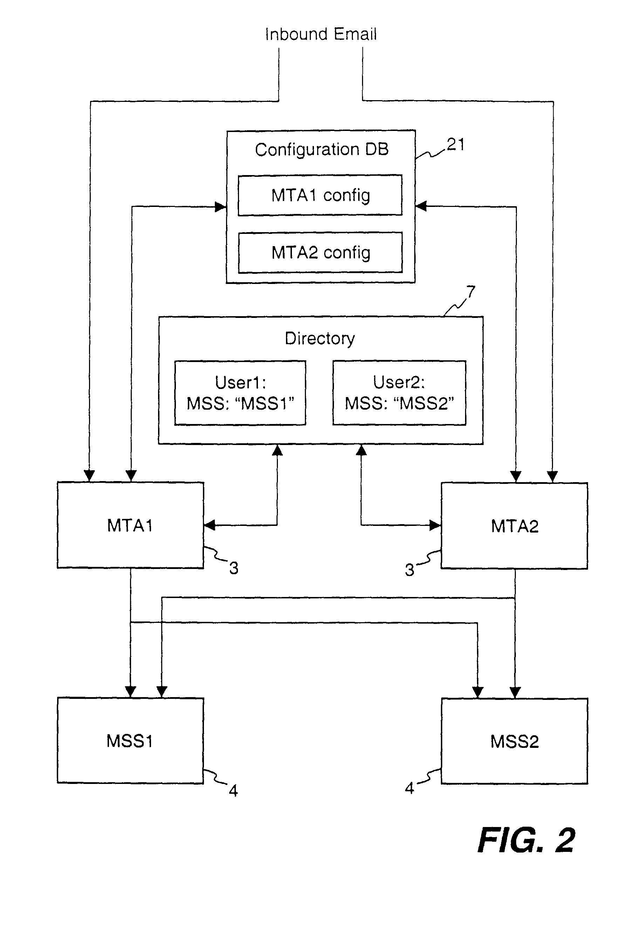

The operation of the network environment of Figure 1 is described further now with reference to Figure 2. Figure 2 shows a simple example of the operation of two MTAs 3, MTA1 and MTA2, with respect to two users, user1 and user2. Both MTAs have access to a configuration database 21 and the directory 7. As noted above, the directory 7 stores user-specific data, including the MSS 4 in which each user's mailbox is maintained. In this example, the directory 7 has user1's mailbox set to "MSS1" and user2's mailbox set to "MSS2". Other examples of information that may be stored in the directory are each user's password, the storage limit for each user's mailbox, and the status of various user-configurable options, such as auto-reply or email forwarding.

The configuration database 21 stores configuration information for each MTA 3, defining how each MTA 3 should behave, which therefore affects all users on the illustrated system. (Of course, some MTA features depend on user-specific data, which are retrieved from the directory.) Examples of information that may be stored in the configuration database are: whether users should be allowed to relay email if they use SMTP authentication; whether an MTA 3 should offer encryption services; the number of local delivery threads to run in parallel to each MSS 4; and the number of the validator threads to run in parallel in an MTA 3.

In operation, when an MTA 3 receives an inbound email, the MTA 3 looks up the location of the intended recipient's mailbox from the intended recipient's account in the directory 7 and then forwards the email to the designated MSS 4.

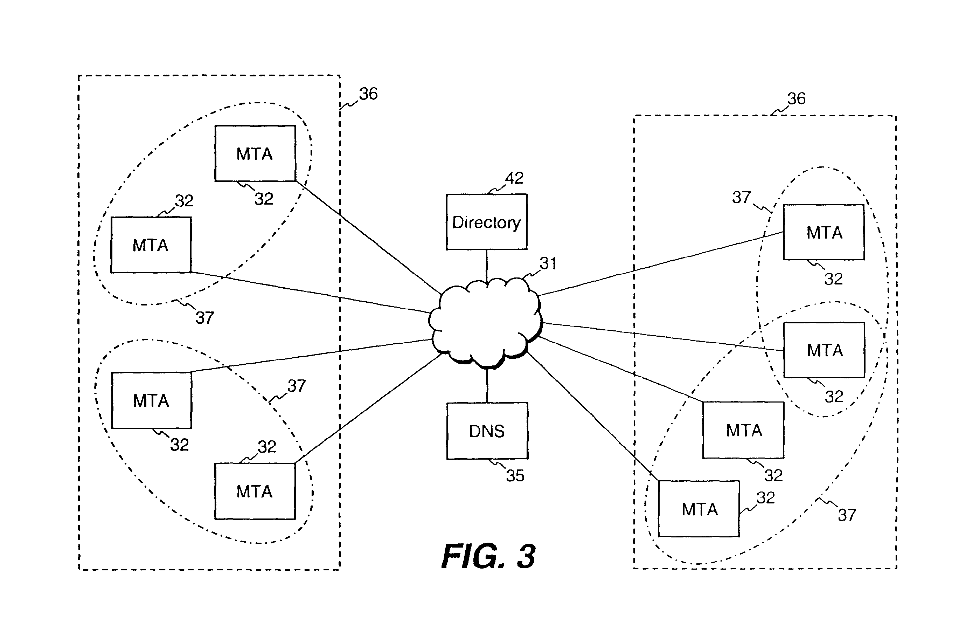

Figure 3 shows a network for communication of email using the realms feature. The physical construction of the network can be the same as an the example of Figure 1. Each of the MTAs can be essentially identical to the MTAs 3 described above, except as now described. Not shown are the various MSSs and MUAs, which also can be essentially identical to those described above. Each MTA 32 according to the present invention is located within one of many predefined domains 36, which may be Internet domains as in the example of Figure 1. In this case however, each domain 36 is further divided into two or more subdomains 37, referred to as "realms". A realm 37 may be defined as a group of MTAs. A given MTA 32 may be a member of more than one realm, as shown on the right side of Figure 3. Each realm 37 may be defined to include any number of MTAs, users, and associated MSSs.

To facilitate explanation, it is assumed that the network shown in Figure 3 is that of one service provider. Accordingly, each MTA 32 has access to a directory 42, which can be essentially the same as any of the directories 7 in Figures 1 and 2, except that it contains additional information for each user, specifically, the mailRealm attribute defining the realm to which each user is assigned. Note that all the MTAs from a given domain can be under the same organizational control. In addition, a particular service provider can operate multiple domains, such that all of the MTAs from two or more domains can be under the same organizational control.

Each user is assigned to only one realm. A user's realm is defined by an attribute, "mailRealm", stored in the user's directory account, the value of which can be a simple string. The realm(s) 37 which each MTA 32 services is/are defined by an attribute of that MTA, referred to as "localRealms", stored in the MTA, the value(s) of which can be strings formatted as DNS domain names. A given MTA 32 may be configured to serve one or multiple realms.

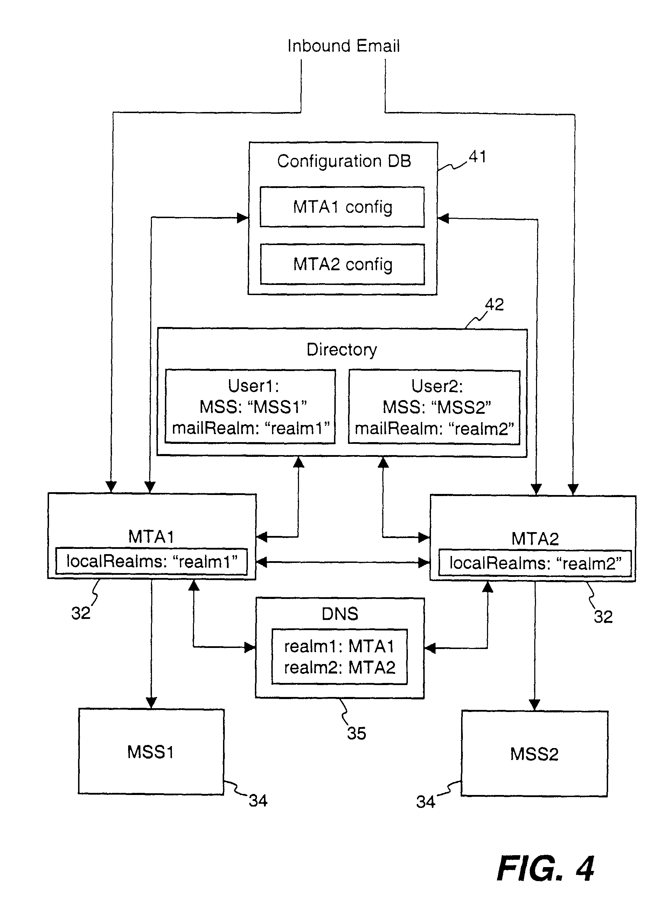

The operation of the network environment to Figure 3 is described further now with reference to a simple example illustrated in Figure 4. The directory 42 can be essentially the same as directory 7 of Figure 2, except that contains additional information for each use, specifically, the mailRealm attribute defining the realm to which each user is assigned. In this example, the directory 42 has user1's mailRealm attribute set to "realm1" and user2's mailRealm attribute set to "realm2". Also, each MTA 32 has a localRealms attribute, defining the realm or realms which the MTA 32 serves. MTA1's localRealms attribute is set to "realm1", in this example, while MTA2's localRealms attribute is set to "realm2". Despite this simple example, realms can be defined to cover particular geographic regions (e.g., countries, continents, etc.), as described above, particularly if the service provider's customers are located in various different countries or continents.

In operation, when an MTA 32 receives an inbound email, it determines whether it is responsible for the realm specified in the mailRealm attribute of the user account of the intended recipient of the e-mail. It does so by determining if its localRealms attribute contains any value which matches the value of the mailRealm attribute of the intended recipient in the directory 42. If a match is found, the MTA 32 proceeds with normal message delivery to the appropriate MSS. If the MTA 32 determines that it is not a member of the realm to which the user account is assigned, it will relay the message to another MTA which does serve the realm to which the user account is assigned. In the illustrated embodiment, an MTA 32 identifies another MTA 32 serving a specified realm by performing a DNS lookup. Accordingly, the DNS 35 provides a mapping of MTAs to realms, which in this example maps realm1 to MTA1 and realm2 to MTA2.

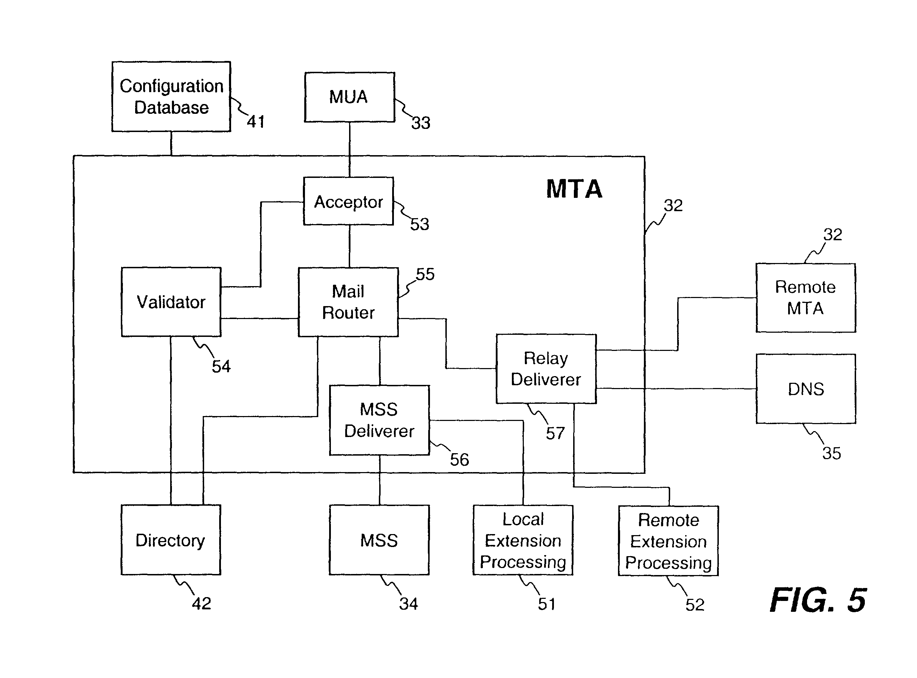

Figure 5 shows in greater detail an email system including an MTA 32 capable of using the realms feature in the manner described above. As shown, the MTA 32 is operatively coupled to an MUA 33, an MSS 34, a DNS 35, one or more remote MTAs 32, a configuration database 41 and a directory 42. The MTA 32 also has access to local extension processing logic 51 and remote extension processing logic 52. Local extension processing logic 51 and remote extension processing logic 52 are optionally invoked for particular received email messages to perform any supplemental message processing logic required by the service provider.

The MTA 32 includes an acceptor 53, a validator 54, a mail router 55, an MSS deliverer 56, and a relay deliverer 57. In one embodiment, each of these elements of the MTA 32 is embodied as software that can be executed by a general-purpose microprocessor in a conventional computer system. However, any these elements can alternatively be implemented purely as hardware, or as a combination of hardware and software. The acceptor 53 includes address completion logic and logic to parse the envelope of the email into its various elements (e.g., the sender's address and a list of one or more recipient addresses). Note that the envelope of the email normally arrives before the message itself. The validator 54 determines whether the sender is allowed to send, and whether the recipient to receive (and, in fact, whether the recipient exists if his address is a local address), the message. To do this, the validator 54 may query both the directory 442 and the configuration database 41.

The mail router 55 is responsible for determining whether a designated recipient is local or remote (by analyzing the recipient's address and querying the directory 42). The relay deliverer 57 identifies the correct MTA for each remote recipient, using DNS lookup, and then relays the message to a remote MTA 32 across the appropriate channel. The relay deliverer 57 also invokes (optional) remote extension processing 52, when required. The MSS deliverer 56 delivers email addressed to local recipients to the appropriate MSS 34 and, when required, invokes (optional) local extension processing 51. Note that the MTA 32 can be configured, if desired, to relay an email to a remote MTA only after any local extension processing has been performed.

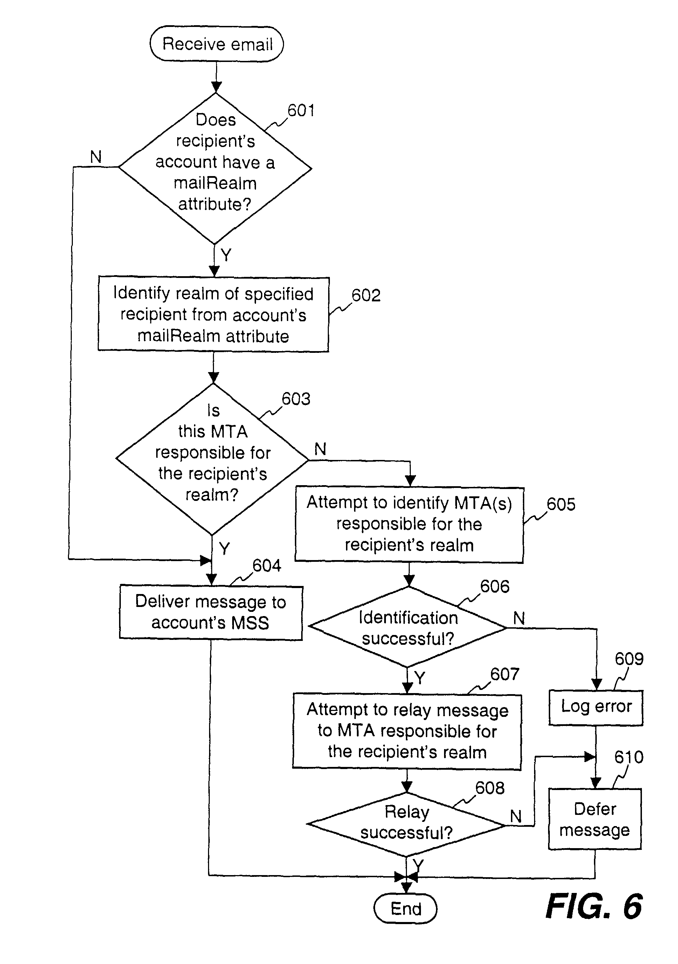

Figure 6 is a flow diagram showing a high-level process which the MTA32 may use to process received email. In response to receiving an email, at block 601 the MTA 32 determines whether the recipient account has a mailRealm attribute. If the recipient account does not have a mailRealm attribute, then the process branches to block 604, in which the MTA 32 delivers the message to the MSS 34 which holds the mail store for this user. If the user account has a mailRealm attribute, then at block 602 the MTA 32 identifies the realm of the specified recipient from the accounts mailRealm attribute and determines at block 603 whether it serves that realm. As indicated above, this task may be accomplished simply by attempting to match the value of the mailRealm attribute with a value of the localRealms attribute of the MTA 32. If there is a match, then the process proceeds to block 604, in which the email is delivered to the account's MSSs as described above, and the process ends. If there is no match at block 603, then at block 605 the MTA 32 attempts to identify another MTA which is responsible for the intended recipient's realm. As noted above, this may be accomplished by DNS lookup, although that is not necessarily the case. Assuming DNS lookup is used, at block 605 the MTA 32 employs a conventional technique by first performing a lookup for an MX record for the specified realm, and if that fails, performing an A record lookup.

If identification of another MTA is successful at block 606, the MTA 32 attempts to relay the message to the other MTA at block 607. Following block 607, at block 608 if the relay was successful, the process ends. If identification of a remote MTA was not successful at block 606, then the process branches to block 609, in which in error is logged. Following block 609, or if the relay was not successful at block 608, the message is deferred at block 610, and the process then ends. Note that this process can be configured to relay an email to a remote MTA only after any local extension processing has occurred.

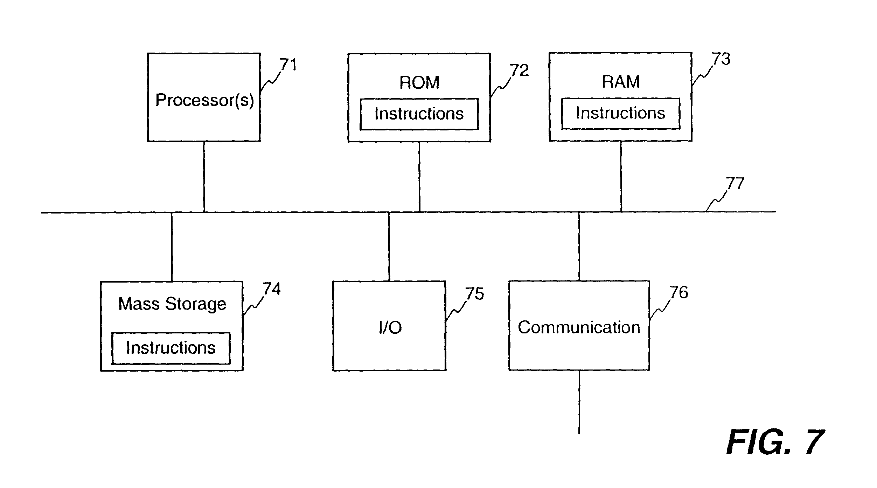

The various elements and processes of an MTA described above can be implemented in any suitable computing platform or platforms, as indicated above. Figure 7 shows an abstraction of such a computing platform, in which an MTA implementing the realms feature can be embodied. Of course, the illustrated system also may be representative of other types of elements mentioned above, such as an MSSs, a DNS, etc.

The illustrated computer system includes one or more processors 71, i.e. a central processing unit (CPU), read-only memory (ROM) 72, and random access memory (RAM) 73, which may be coupled to each other by a bus system 77. The processor(s) 71 may be, or may include, one or more programmable general-purpose or special-purpose microprocessors, digital signal processors (DSPs), programmable controllers, application specific integrated circuits (ASICs), programmable logic devices (PLDs), or a combination of such devices. The bus system 77 includes one or more buses or other connections, which may be connected to each other through various bridges, controllers and/or adapters, such as are well-known in the art. For example, the bus system 77 may include a "system bus", which may be connected through one or more adapters to one or more expansion buses, such as a Peripheral Component Interconnect (PCI) bus, HyperTransport or industry standard architecture (ISA) bus, small computer system interface (SCSI) bus, universal serial bus (USB), or Institute of Electrical and Electronics Engineers (IEEE) standard 1394 bus (sometimes referred to as "Firewire").

Also coupled to the bus system 77 are one or more mass storage devices 74, input/output (I/O) devices 75, and data communication devices 76. Each mass storage device 74 may be, or may include, any one or more devices suitable for storing large volumes of data in a non-volatile manner, such as a magnetic disk or tape, magneto-optical (MO) storage device, or any of various forms of Digital Versatile Disk (DVD) or Compact Disk (CD) based storage, or a combination thereof.

Each data communication device 76 is a device-suitable for enabling the processing system to communicate data with remote devices and may be, for example, a wireless transceiver (e.g., in the case of a mobile device), a conventional modem, a Digital Subscriber Line (DSL) modem, a cable modem, an Ethernet adapter, an Integrated Services Digital Network (ISDN) adapter, a satellite transceiver, or the like. The I/O device(s) 75 may include, for example, a keyboard or keypad, a display device, and a pointing device (e.g., a mouse, trackball, or touchpad). Note, however, that such I/O devices may be unnecessary for certain devices and/or in certain embodiments. For example, a device which functions purely as a server does not necessarily require local I/O devices in addition to a data communication device, particularly if the server is not intended to directly interface with a user or operator. Similarly, it may not be desirable (or practical) to equip a mobile device with a mass storage device. Many other variations on the above described embodiment are possible. Further, it will be understood that the processing system may include other conventional components such as are well-known in the art (e.g., RF signal processing circuitry in the case of a mobile device 1).

The processes described above may be implemented in software 78, which may reside, either partially or completely, in any of RAM 73, mass storage device 74 and/or ROM 72, as shown.

Note that there are many possible applications and variations of, and extensions to, the realms technique described above. For example, in a case where a single, extended installation handles a number of DNS domains, a realm might be associated with other data concerning that domain in the directory. In a situation in which a smaller service provider is acquired by a larger service provider, this approach would allow all email for the smaller service provider's domain to be received by the larger service provider's existing infrastructure, and then sent on to the separate site where the smaller service provider's mail stores are still located. Although this approach does not provide the flexibility of per-user routing, it also avoids the overhead of per-user routing.

The realms feature can also be extended to other types of access mechanisms. For example, a post office protocol (POP) server might proxy (transparently bridge) an incoming connection to another POP server in the correct realm. This approach minimizes exposure of "internal" networks. For example, it is very common for a service provider to set up its network security so that machines which actually store customer data (e.g., the MSSs and the directory) are only accessible from a limited set of IP addresses, such as only the IP addresses which belong to servers that are in the same physical location as the secured machine. If the MSS machines are being accessed (for message delivery or retrieval) from front-end processors (MTAs, POP servers, IMAP servers, etc.) which are in other physical locations, then access to the IP addresses of the secured machines normally cannot be restricted in this way. However, the realms mechanism can be used as a type of proxying which allows access to customer-data machines to be restricted as described, but where a user's access to his messages remains unrestricted. This approach, therefore, enhances security while not limiting the user's control over his messages.

In another variation, when a piece of email arrives at an MTA, it is possible to attempt delivery to the MSS via a service provider's internal network, and if delivery is unsuccessful, to use an account's mailRealm attribute to send the email to the same MSS via SMTP (e.g., across the Internet). This approach might be used when a service provider's internal network is unreliable, but the service provider's Internet connections are reliable.

Thus, an MTA for transferring email messages on a network without rewriting the recipient address has been described. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative sense rather than a restrictive sense.

## Claims

1. A method of operating a communication transfer agent in a network domain on a network, the method comprising:
receiving an electronic communication at the message transfer agent, the electronic communication having a recipient address indicating an intended recipient of the electronic communication;
determining whether the message transfer agent has a predetermined association with the intended recipient; and
if the message transfer agent does not have the predetermined association with the intended recipient, then relaying the electronic communication to another message transfer agent within said network domain, without altering the recipient address of the electronic communication.

2. A method as recited in claim 1, wherein said recipient address is contained in an envelope of the electronic communication, the electronic communication further having a header indicating the intended recipient.

3. A method as recited in claim 1, wherein the electronic communication is an email.

4. A method as recited in claim 1, wherein the network domain is a DNS domain.

5. A method as recited in claim 1, wherein said determining whether the message transfer agent has a predetermined association with the intended recipient comprises identifying a realm of the intended recipient from a plurality of realms defined within said network domain.

6. A method as recited in claim 5, wherein each of the realms is a subdomain of a DNS domain.

7. A method as recited in claim 5, wherein said relaying the electronic communication to another message transfer agent within said network domain comprises relaying the electronic communication to a message transfer agent in another realm within said network domain.

8. A method as recited in claim 5, further comprising, if the message transfer agent is associated with the realm of the intended recipient, then storing the electronic communication in a message store server associated with the message transfer agent.

9. A method as recited in claim 5, wherein at least one realm of the plurality of realms comprises a group of message transfer agents.

10. A method as recited in claim 5, wherein said identifying a message transfer agent associated with the intended recipient comprises performing a DNS lookup.

11. A method as recited in claim 10, wherein said identifying the realm of the intended recipient is done without using information from a DNS.

12. A method of operating a message transfer agent in a network domain, the method comprising:
receiving, at the message transfer agent, an email communication transmitted over a network, the email communication having an envelope containing a recipient address, the recipient address indicating an intended recipient of the email communication, the email communication further having a set of headers;
determining whether the message transfer agent is associated with a realm of the intended recipient; and
if the message transfer agent is not associated with the realm of the intended recipient, then relaying the communication within said network domain to a message transfer agent associated with the realm of the intended recipient, without altering the recipient address.

13. A method as recited in claim 12, further comprising, prior to determining whether the message transfer agent is associated with a realm of the intended recipient, identifying the realm of the intended recipient from a plurality of realms defined within said network domain.

14. A method as recited in claim 13, wherein the network domain is a DNS domain.

15. A method as recited in claim 14, wherein each of the realms is a subdomain of the DNS domain.

16. A method as recited in claim 12, further comprising, if the message transfer agent is associated with the realm of the intended recipient, then storing the communication in a message store server associated with the message transfer agent.

17. A method as recited in claim 12, wherein said identifying a message transfer agent associated with the realm of the intended recipient comprises performing a DNS lookup.

18. A method as recited in claim 17, wherein said identifying the realm of the intended recipient is done without using information from a DNS.

19. A method as recited in claim 12, further comprising accessing a database which stores a set of account data for each of a plurality of users, each set of account data including an attribute which specifies a realm of the corresponding user.

20. A method as recited in claim 12, wherein at least realm of the plurality of realms comprises a group of message transfer agents.

21. A method of operating a message transfer agent on a network, the method comprising:
receiving, at the message transfer agent, an email communication transmitted over the network, the email communication having a recipient address indicating an intended recipient of the email communication;
identifying a realm of the intended recipient from a plurality of realms defined within a single network domain;
determining whether the message transfer agent is in the realm of the intended recipient;
if the message transfer agent is in the realm of the intended recipient, then storing the communication in a message store server associated with the message transfer agent; and
if the message transfer agent is not in the realm of the intended recipient, then
identifying a message transfer agent in the realm of the intended recipient within said network domain, and
relaying the communication within said network domain to the message transfer agent in the realm of the intended recipient, without altering the recipient address of the communication.

22. A method as recited in claim 21, wherein the recipient address is part of an envelope of the email communication, the email communication further having a set of headers.

23. A method as recited in claim 21, wherein the network domain is a DNS domain.

24. A method as recited in claim 23, wherein each of the realms is a subdomain of the DNS domain.

25. A method as recited in claim 21, wherein said identifying a message transfer agent associated with the realm of the intended recipient comprises performing a DNS lookup.

26. A method as recited in claim 25, wherein said identifying the realm of the intended recipient is done without using information from a DNS.

27. A method as recited in claim 21, further comprising accessing a database which stores a set of account data for each of a plurality of users, each set of account data including an attribute which specifies a realm of the corresponding user.

28. A method as recited in claim 21, wherein at least one realm of the plurality of realms comprises a group of message transfer agents.

29. A method of operating a message transfer agent operating within a single network domain on a network, the method comprising:
receiving, at the message transfer agent, an email communication transmitted over the network, the email communication having an envelope containing a recipient address indicating an intended recipient of the email communication;
accessing account data for the intended recipient in a database which stores a set of account data for each of a plurality of users, each set of account data including a realm attribute specifying a realm, associated with the corresponding user, of a plurality of realms defined within the single network domain;
using the realm attribute of the intended recipient to identify a realm of the intended recipient;
determining whether the message transfer agent is in the realm of the intended recipient;
if the message transfer agent is determined to be in the realm of the intended recipient, then storing the communication in a message store server associated with the message transfer agent; and
if the message transfer agent is determined not to be in the realm of the intended recipient, then
identifying a message transfer agent in the realm of the intended recipient within said network domain, by performing a DNS lookup, and
relaying the communication within said network domain to the message transfer agent in the realm of the intended recipient, without altering the recipient address.

30. A method as recited in claim 29, wherein at least one realm of the plurality of realms comprises a group of message transfer agents.

31. A message transfer agent to operate in a network domain on a network, the message transfer agent comprising:
a mail router to determine whether the message transfer agent is responsible for delivering an email communication received over a network to a mail store of an intended recipient of the email communication, the email communication having a recipient address indicating the intended recipient;
a mail store deliverer to store the email communication in a mail store server associated with the message transfer agent if the message transfer agent is responsible for delivering the email communication to the mail store of the intended recipient; and
a relay deliverer to relay the communication to another message transfer agent within said network domain, without altering the recipient address of the communication, if the message transfer agent is not responsible for delivering the email communication to the mail store of the intended recipient.

32. A message transfer agent as recited in claim 31, wherein said recipient address is contained in an envelope of the communication, the communication further having a header indicating the intended recipient.

33. A message transfer agent as recited in claim 31, wherein the network domain is a DNS domain.

34. A message transfer agent as recited in claim 31, wherein the mail router is to determine whether the message transfer agent is responsible for delivering the email communication to the mail store of the intended recipient by identifying a realm of the intended recipient from a plurality of realms defined within said network domain.

35. A message transfer agent as recited in claim 34, wherein each of the realms is a subdomain of a DNS domain.

36. A message transfer agent as recited in claim 34, wherein the relay deliverer is to relay the communication to another message transfer agent within said network domain by relaying the communication to a message transfer agent in another realm within said network domain.

37. A message transfer agent as recited in claim 31, wherein at least realm of the plurality of realms comprises a group of message transfer agents.

38. A message transfer agent as recited in claim 34, wherein the mail router is further to identify a message transfer agent associated with the intended recipient comprises performing a DNS lookup.

39. A message transfer agent as recited in claim 38, wherein the mail router identifies the message transfer agent associated with the intended recipient without using information from a DNS.

40. A machine-readable program storage medium storing a set of instructions, the instructions for use in a processing system operable as a message transfer agent on a network, to configure the processing system to execute a process comprising:
receiving, at the message transfer agent, an email communication transmitted over the network, the email communication having a recipient address indicating an intended recipient of the email communication;
identifying a realm of the intended recipient from a plurality of realms defined within a single network domain;
determining whether the message transfer agent is in the realm of the intended recipient;
if the message transfer agent is in the realm of the intended recipient, then storing the communication in a message store server associated with the message transfer agent; and
if the message transfer agent is not in the realm of the intended recipient, then
identifying a message transfer agent in the realm of the intended recipient within said network domain, and
relaying the communication within said network domain to the message transfer agent in the realm of the intended recipient, without altering the recipient address of the communication.

41. A machine-readable program storage medium as recited in claim 40, wherein at least realm of the plurality of realms comprises a group of message transfer agents.

42. A machine-readable program storage medium as recited in claim 40, wherein the recipient address is part of an envelope of the email communication, the email communication further having a set of headers.

43. A machine-readable program storage medium as recited in claim 40, wherein the network domain is a DNS domain.

44. A machine-readable program storage medium as recited in claim 43, wherein each of the realms is a subdomain of the DNS domain.

45. A machine-readable program storage medium as recited in claim 40, wherein said identifying a message transfer agent associated with the realm of the intended recipient comprises performing a DNS lookup.

46. A machine-readable program storage medium as recited in claim 45, wherein said identifying the realm of the intended recipient is done without using information from a DNS.

47. A machine-readable program storage medium as recited in claim 40, wherein the process further comprises accessing a database which stores a set of account data for each of a plurality of users, each set of account data including an attribute which specifies a realm of the corresponding user.

48. A machine-readable program storage medium as recited in claim 40, wherein at least one realm of the plurality of realms comprises a group of message transfer agents.

49. A machine-readable program storage medium as recited in claim 40, wherein the process further comprises accessing account data for the intended recipient in a database which stores a set of account data for each of a plurality of users, each set of account data including a realm attribute specifying a realm, associated with the corresponding user, of a plurality of realms defined within the single network domain.

50. A processing system comprising:
a processor;
a data communication device to couple the processing system to a network; and
a storage device storing instructions for execution by the processor, to configure the processing system to operate as a message transfer agent in a network domain, the instructions configuring the processing system to execute a process comprising
receiving, at the message transfer agent, an email communication transmitted over the network, the email communication having a recipient address indicating an intended recipient of the email communication, wherein said recipient address is contained in an envelope of the communication, the communication further having a header,
determining whether the message transfer agent is responsible for delivering the email communication to a mail store of the intended recipient, and
if the message transfer agent is not responsible for delivering the email communication to a mail store of the intended recipient, then relaying the communication to another message transfer agent within said network domain, without rewriting the recipient address of the communication.

51. A processing system as recited in claim 50, wherein the header indicates the intended recipient.

52. A processing system as recited in claim 50, wherein the network domain is a DNS domain.

53. A processing system as recited in claim 50, wherein said determining whether the message transfer agent is responsible for delivering the email communication to a mail store of the intended recipient comprises identifying a realm of the intended recipient from a plurality of realms defined within said network domain.

54. A processing system as recited in claim 50, wherein each of the realms is a subdomain of a DNS domain.

55. A processing system as recited in claim 54, wherein said relaying the communication to another message transfer agent within said network domain comprises relaying the communication to a message transfer agent in another realm within said network domain.

56. A processing system as recited in claim 54, wherein the process further comprises, if the message transfer agent is associated with the realm of the intended recipient, then storing the communication in a message store server associated with the message transfer agent.

57. A processing system as recited in claim 54, wherein said identifying a message transfer agent associated with the intended recipient comprises performing a DNS lookup.

58. A processing system as recited in claim 57, wherein said identifying the realm of the intended recipient is done without using information from a DNS.

59. A processing system as recited in claim 54, wherein at least realm of the plurality of realms comprises a group of message transfer agents.

60. A processing system as recited in claim 50, wherein the process further comprises accessing account data for the intended recipient in a database which stores a set of account data for each of a plurality of users, each set of account data including a realm attribute specifying a realm, associated with the corresponding user, of a plurality of realms defined within the single network domain.

61. A message transfer agent in a network domain on a network, the message transfer agent comprising:
means for receiving an email communication at the message transfer agent, the email communication having a recipient address indicating an intended recipient of the email communication;
means for determining whether the message transfer agent is responsible for delivering the email communication to a mail store of the intended recipient; and
means for relaying the communication to another message transfer agent within said network domain, without altering the recipient address of the communication if the message transfer agent is not responsible for delivering the email communication to the mail store of the intended recipient.
